Europäisches Patentamt

European Patent Office

Office européen des brevets

(19)

(11) Numéro de publication: **0 087 160**
**B1**

(12) **FASCICULE DE BREVET EUROPEEN**

(45) Date de publication du fascicule du brevet:
06.08.86

(51) Int. Cl.⁴: **B 22 F 3/10, H 01 M 4/80**

(21) Numéro de dépôt: **83101681.1**

(22) Date de dépôt: **22.02.83**

(54) Procédé de préparation d'un corps poreux métallique.

(30) Priorité: **24.02.82 FR 8203034**

(43) Date de publication de la demande:
**31.08.83 Bulletin 83/35**

(45) Mention de la délivrance du brevet:
**06.08.86 Bulletin 86/32**

(84) Etats contractants désignés:
**AT BE CH DE FR GB IT LI LU NL SE**

(56) Documents cités:
**FR - A - 1 387 243**
**FR - A - 1 573 863**
**FR - A - 2 029 930**
**FR - A - 2 372 514**
**GB - A - 339 645**
**US - A - 3 186 871**

(73) Titulaire: **COMPAGNIE GENERALE D'ELECTRICITE
Société anonyme dite:, 54, rue La Boétie, F-75382 Paris
Cedex 08 (FR)**

(72) Inventeur: **Duperray, Gérard, 2, rue Pasteur La Norville,
F-91290 Arpajon (FR)**
Inventeur: **Hilaire, Michel, 35 Résidence Courdimanche,
F-91940 Les Ulis (FR)**

(74) Mandataire: **Weinmiller, Jürgen et al, Zeppelinstrasse 63,
D-8000 München 80 (DE)**

ACTORUM AG

## Description

La présente invention vise un procédé de préparation d'un corps poreux métallique, avantageusement utilisable pour constituer une électrode de générateur électrochimique.

On connaît un procédé de préparation de plaques poreuses frittées, en nickel, à partir d'un mélange comportant de la poudre de nickel, de l'eau, un agent plastifiant, tel que du polyéthylène glycol et un agent traitant, de préférence de l'alcool polyvinylique.

Un tel procédé est par exemple décrit dans le document US-A3 186 871.

Après introduction d'air dans le mélange de manière à former une mousse, on procède à une mise en forme et à un traitement thermique, comprenant un séchage et un frittage, durant lequel les agents plastifiant et traitant sont éliminés.

On a pu toutefois constater que ce procédé présentait certains inconvénients car, durant le traitement thermique, il y avait effondrement de la structure plus ou moins mousseuse du mélange, ce qui est un facteur d'abaissement de la porosité et conduit à une configuration non alvéolaire au sein du matériau fritté.

On peut également réaliser des corps poreux métalliques à partir de mousses organiques chargées en métal, par exemple des mousses de polyuréthane, que l'on traite ensuite thermiquement. Ces mousses métallisées peuvent être préparées en mélangeant les monomères et des particules métalliques, puis on déclenche à la fois la formation de la mousse de résine et sa solidification. Un tel procédé est par exemple décrit dans le document FR-A-1 573 863. La proportion importante du constituant organique par rapport au constituant métallique dans la mousse réalisée est une source importante d'inconvénients.

L'élimination de ce composant organique lors du traitement thermique est d'une part une source de nuisances et conduit d'autre part, et surtout, à des retraits de matière élevés, ce qui abaisse la porosité et engendre des fissures.

La présente invention permet de remédier aux inconvénients précédemment mentionnés. Elle a notamment pour but un procédé de préparation d'un corps poreux métallique présentant une porosité d'une finesse prédéterminée comprise entre 7 et 100 microns au maximum, un tel corps poreux pouvant être préparé à partir de n'importe quel type de poudre métallique, ledit procédé étant par ailleurs d'une mise en oeuvre aisée tout en présentant une excellente fiabilité.

L'invention a pour objet un procédé de préparation d'un corps poreux métallique, comprenant la réalisation d'une mousse métallisée, sa mise en forme et un traitement thermique de pyrolyse et frittage, caractérisé par le fait que dans un premier temps, on réalise par agitation et/ou insufflation d'air une mousse d'eau et d'air en présence d'un agent tensio-actif et d'un agent gélifiant, puis on incorpore dans ladite mousse de la poudre métallique de façon à obtenir une suspension de métal dans la mousse et, avant de procéder à la mise en forme de la mousse métallisée, on ajoute à celle-ci un agent stabilisant apte à se polymériser au contact de l'eau de manière à provoquer, avant le traitement thermique, le figement de la structure de la mousse, le mélange mousse métallisée-agent stabilisant comportant en poids 2 à 9% d'agent stabilisant.

L'invention sera décrite ci-après plus en détail à l'aide d'un exemple de réalisation donné à titre purement illustratif mais nullement limitatif, en référence aux dessins et diagrammes annexés dans lesquels:

La figure 1 représente la structure d'un corps poreux métallique obtenu conformément à l'invention.

Les figures 2 et 3 représentent des caractéristiques de porosité de corps poreux métalliques réalisés selon l'invention.

Selon un mode d'exécution conforme à la présente invention, un corps poreux métallique est préparé de la façon suivante:

Dans un premier temps, on réalise une mousse d'eau par agitation mécanique et/ou insufflation de l'air sur de l'eau additionnée d'un agent tensio-actif à raison de 3 à 7g par litre d'eau et d'un agent gélifiant à raison de 5 à 15g par litre d'eau.

Selon la composition de la solution aqueuse, l'agitation et/ou l'insufflation de l'air permettent d'obtenir un volume de mousse compris entre le triple et le sextuple du volume initial.

On utilise un agent tensio-actif usuel; il peut être de type anionique (tel qu'un alkyl sulfonate par exemple), de type cationique (tel qu'un sel d'ammonium quaternaire), ou de type non ionique (tel qu'un polyéther comportant une chaine arylalkyl et une fonction alcool).

L'agent tensio-actif est par exemple du «Triton X 100» commercialisé par la société «Rohm et Haas», de type non ionique.

On utilise un agent gélifiant usuel par exemple choisi dans le groupe formé par la carboxyméthylcellulose, la polyvinyl pyrrolidone, l'alcool polyvinylique, l'albumine, l'agar-agar.

Sans la présence de cet agent gélifiant, la structure de la mousse serait détruite lors de l'incorporation de la poudre métallique. Cette opération est réalisée par agitation de la poudre métallique dans la mousse. Le métal est avantageusement choisi dans le groupe comportant le fer, le cobalt, le nickel, l'argent, le chrome, le plomb et leurs alliages. La quantité de métal introduite représente environ 30 à 300% du poids de la mousse, ladite quantité étant prédéterminée en fonction de la nature de la poudre utilisée et de la porosité finale désirée de l'électrode.

Puis, selon une caractéristique essentielle de l'invention, la structure de la mousse d'eau comportant la poudre de métal en suspension, est stabilisée en lui incorporant sous agitation un agent stabilisant apte à se polymériser au contact de l'eau. Le mélange mousse métallisée-agent stabilisant comporte en poids de 2 à 9% d'agent stabilisant. En dessous de 2%, on n'arrive plus à figer la structure de la mousse; au dessus de 9%, on retrouve les inconvénients cités ci-dessus et par ailleurs la vitesse de polymérisation est telle que la mise en forme s'en trouve compliquée.

Avantageusement, l'agent stabilisant appartient à la famille des polyuréthanes et dans ce cas il peut être formé à partir d'un mélange comprenant un composé hydroxylé et un isocyanate.

On peut ainsi utiliser comme composés hydroxylés des polyéthylène glycols, des polyols, des acides gras condensés sur des chaines aliphatiques, des huiles végétales.

Comme isocyanates, on peut utiliser par exemple les composés suivants:

- 2,4 ou 2,6 toluylène diisocyanate (TDI),
- hexaméthylène diisocyanate,
- p, p' diphénylméthane diisocyanate,
- TDI condensé sur triméthylol-propane
- polyisocyanate aromatique (par exemple DESMODUR L de Bayer)
- polyisocyanate aliphatique (par exemple DESMODUR N de Bayer).

On peut également utiliser un prépolymère de glycol comportant des fonctions isocyanates actives. Un tel produit est par exemple du type PP20 commercialisé par la Société «Tramico». Il est ajouté à la mousse métallisée à une température comprise entre 0°C et la température ambiante.

Ledit agent stabilisant se polymérise d'ailleurs rapidement au contact de l'eau soit en quelques secondes à température ambiante, soit en quelques dizaines de secondes lorsque la température est voisine de 0°C. On obtient ainsi un produit visqueux que l'on coule sur un support de façon à obtenir une bande sont on ajuste l'épaisseur, par exemple entre 0,3 et 30mm environ. Lorsque la polymérisation est entièrement terminée, la bande est décollée du support puis séchée et éventuellement découpée aux dimensions désirées.

Enfin, ladite bande est soumise à un traitement thermique conduit à une température de 200 à 1500°C selon la nature du métal et sous atmosphère réductrice durant 1 à 60 minutes sauf dans le cas de l'argent pour lequel le traitement thermique est effectué dans l'air pouvant éventuellement être enrichi en azote.

Pour fixer les idées ladite température est de l'ordre de 800 à 1200°C pour le fer, le cobalt et le nickel de 1000 à 1500°C pour le chrome et de 800 à 900°C pour l'argent, de 200 à 250°C pour le plomb.

L'atmosphère réductrice peut être un gaz de craquage d'ammoniac ou de l'hydrogène.

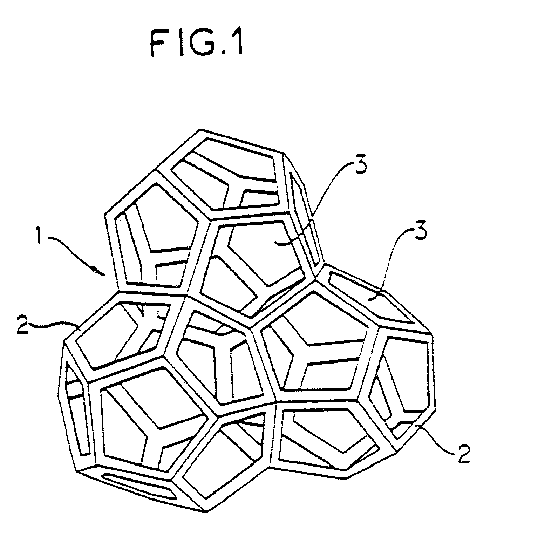

Au cours dudit traitement thermique, l'agent stabilisant et les agents tensio-actif et gélifiant sont pyrolysés et le métal est fritté, ce dernier présentant de la sorte une structure alvéolaire telle que représentée figure 1.

Dans le traitement thermique il est nécessaire d'évacuer ou de piéger les gaz résultant de la pyrolyse car, dans le cas d'agent stabilisant de type polyuréthane, ils renferment une faible quantité d'acide cyanhydrique libre.

La figure 1 représente donc la structure du corps poreux métallique du type tridimensionnel constituée par la juxtaposition d'alvéoles dodécaédriques 1 en métal matérialisés par leurs arêtes 2 et par leurs faces pentagonales 3. Au cours du traitement thermique les alvéoles éclatent en éliminant les faces pentagonales 3 la structure globale se trouvant de ce fait réduite aux seules arêtes 2 des alvéoles.

On peut ainsi obtenir une structure de porosité uniforme, le diamètre moyen des pores pouvant être compris entre 7 et 100 microns.

La porosité totale d'une telle structure est de l'ordre de 70 à 97% et de préférence comprise entre 80 et 90%.

De telles valeurs dépendent bien entendu des conditions opératoires, par exemple de la quantité et de la nature de la poudre utilisée, de la température de frittage, du temps d'agitation et autres, le diamètre des pores étant directement fonction des conditions utilisées pour la réalisation de la mousse d'eau. Ainsi, plus l'agitation est élevée à ce stade, plus les bulles obtenues sont petites et plus le diamètre des pores sera faible.

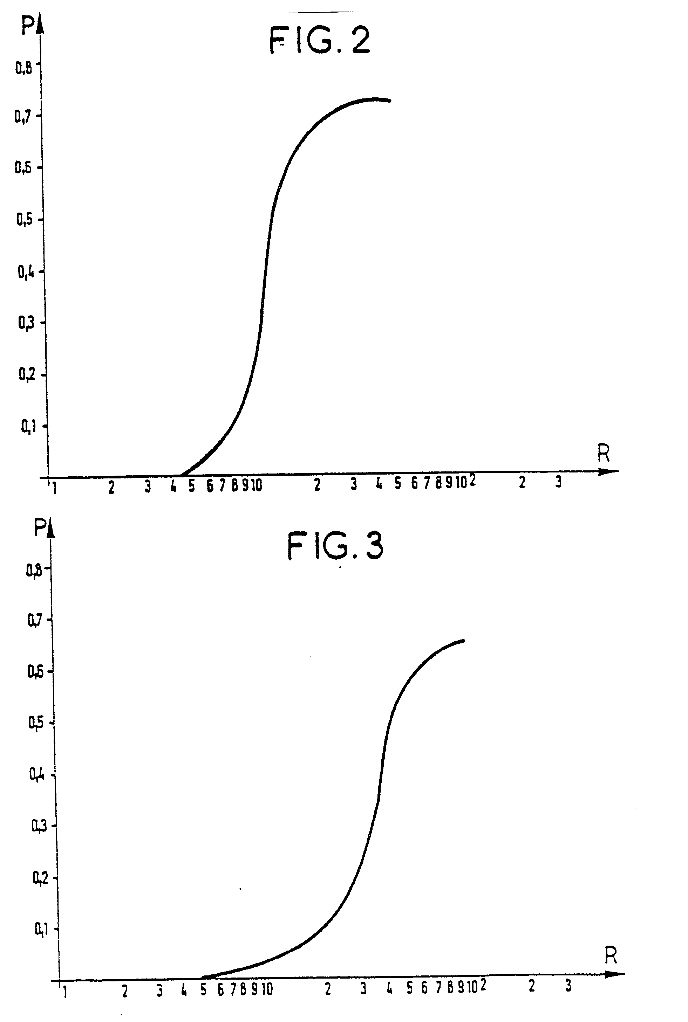

Les figures 2 et 3 présentent la porosité P en $cm^3/g$ de telles structures en fonction du rayon R des pores exprimé en microns, et celà à titre d'exemples nullement limitatifs, étant bien entendu que d'autres caractéristiques peuvent être obtenues selon les conditions opératoires, comme précédemment mentionné.

Les principaux avantages des structures réalisées conformément à l'invention sont les suivants:

En premier lieu, la réalisation de telles structures ne nécessite pas l'utilisation de poudres de métal, présentant des caractéristiques très spécifiques, mais de poudres de type courant et facilement disponibles.

En outre, le diamètre de pores est parfaitement compatible avec l'application envisagée. En effet il est ajustable à volonté entre 7 et 100 microns selon les conditions opératoires.

Par ailleurs, la porosité totale, généralement limitée à 85% dans les structures classiques, peut être portée à 95%.

De plus, le procédé selon l'invention permet d'obtenir facilement des épaisseurs de bandes comprises entre 0,3 et 30mm par simple variation de l'épaisseur au cours de leur coulage, ces bandes pouvant d'ailleurs être calandrées, comprimées, soudées sans le moindre risque de fissuration ou de désagrégation.

On va donner dans ce qui suit des exemples concrets de réalisation de corps poreux selon l'invention.

Exemple N° 1

Dans un récipient on introduit 75cm³ d'une solution aqueuse à 5g/l de Triton X et 5g/l de carboxy-méthyl-cellulose (CMC). Par agitation mécanique on obtient 500cm³ de mousse, puis on incorpore, toujours sous agitation, 50g de nickel excarbonyle par exemple commercialisé par la société INCO, et caractérisé par une densité de 0,9. On refroidit le mélange à 5°C dans un bain réfrigérant, puis on ajoute 7cm³ de prépolymère de glycol par exemple du type PP20 précité. Après 15 secondes de forte agitation, on coule sur une plaque de verre recouverte d'une feuille de papier humecté d'eau, cette plaque étant maintenue à 0°C. A l'aide d'une râclette guidée par deux cales disposées de part et d'autre du papier humide, on répartit le mélange sur toute la surface du support puis on recouvre l'ensemble d'une deuxième feuille de papier humecté d'eau. Après quelques minutes de polymérisation, le produit est décollé du support et les feuilles de papier sont arrachées. Après séchage en étuve ventilée, la bande est découpée et placée sur une plaque de cuisson recouverte d'une mince couche de poudre réfractaire d'alumine ou de silice et disposée dans un four. On chauffe durant une heure à 1100°C sous atmosphère d'azote hydrogéné à 20%. Après refroidissement on obtient une pièce dont le retrait longitudinal est de 37% et le retrait transversal de 30%. Sa porosité totale est de 85% et le rayon de pores moyen de 25 microns.

Exemple N° 2

Cet exemple diffère de l'exemple n° 1 par le fait que la quantité de poudre de nickel introduite est de 100g, et que la température de frittage est de 1000°C. Le produit obtenu présente une porosité totale de 85%, un rayon moyen de pores de 70 microns et a subi pendant le frittage un retrait longitudinal de 30% et transversal de 32%.

Exemple N° 3

Cet exemple diffère de l'exemple n° 1 en ce que la solution moussante contient 10g/l de CMC et 5g/l de Triton X, la poudre de nickel étant réalisée à partir de nickel ex-carbonyle de densité 2,2, la quantité de poudre étant de 200g et la température de frittage de 900°C. Le produit correspondant présente une porosité totale de 82%, un rayon moyen de pores de 25 microns. Au cours du frittage le retrait longitudinal est de 10% seulement et le retrait transversal est de 12% seulement.

Exemple N° 4

Cet exemple diffère de l'exemple 1 en ce que la solution moussante contient 7g/l de CMC et 7g/l de Triton X. La nature de la poudre de nickel est du type pelliculaire commercialisé par exemple par la Société «MPD Technology», la température de frittage étant de 1000°C. Le produit correspondant présente une porosité totale de 90%, un rayon moyen de pores de 12 microns et a subi au frittage un retrait longitudinal de 41% et un retrait transversal de 43%.

Exemple N° 5

Cet exemple diffère de l'exemple 1 en ce que la solution moussante contient 7g/l de CMC et 5g/l de Triton X, la quantité de poudre de nickel étant de 200g et la température de frittage 1100°C.

Le produit ainsi obtenu présente une porosité totale de 97% et un rayon de pores moyen de 15 microns.

Par rapport aux procédés antérieurs cités dans le préambule de la présente demande, le procédé conforme à l'invention présente notamment les avantages suivants:

1°/ Maintien de la structure alvéolaire depuis son obtention à partir de la solution moussante jusqu'au stade final du métal fritté, grâce:
 – à l'agent gélifiant sans lequel la mousse s'effondre quand on incorpore la poudre métallique,
 – à l'agent stabilisant polymérisant au contact de l'eau, sans lequel la mousse s'effondre durant le séchage. Il a été vérifié que les liants conventionnels tels que les polyéthylène glycols ou les alcools polyvinyliques ne conviennent pas à cette fonction.

2°/ Faible quantité nécessaire d'agent stabilisant (entre 2 et 9% et de préférence entre 3 à 4%), conduisant à une économie de matière première et à un abaissement des nuisances: la pyrolyse du polyuréthane dégage en effet des faibles quantités d'acide cyanhydrique. Le procédé décrit dans le document FR-A-1 573 863 qui consiste à réaliser une mousse de polyuréthane chargée par incorporation de poudre métallique dans les monomères de départ conduit à des pourcentages cinq à dix fois plus importants.

3°/ Possibilité d'utiliser une gamme très étendue de types de poudres métalliques, alors que les procédés qui consistent à incorporer la poudre à un gel aqueux de CMC sont tributaires d'une poudre de type spongieux, plus chère et moins disponible que les poudres courantes.

4°/ Possibilité de faire varier le diamètre moyen des pores entre 7 et 100 microns par modification des conditions expérimentales.

Ainsi le diamètre des pores peut être augmenté par augmentation de la teneur en agent tensioactif, par diminution de la teneur en poudre métallique, par augmentation de la teneur en agent stabilisant, du fait que lors de la polymérisation de l'agent stabilisant lorsque celui-ci est de la famille des polyuréthanes se produit un dégagement de $CO_2$.

Le diamètre des pores peut être diminué par augmentation de la teneur en agent gélifiant, par une agitation de la mousse plus prolongée, par élévation de la durée et/ou de la température de frittage.

L'invention est avantageusement mise en oeuvre dans les électrodes pour générateurs électrochimiques à niveau d'énergie élevé.

**Revendications**

1. Procédé de préparation d'un corps poreux métallique comprenant la réalisation d'une mousse métallisée, sa mise en forme et un traitement thermique de pyrolyse et frittage, caractérisé par le fait que dans un premier temps, on réalise par agitation et/ou insufflation d'air une mousse d'eau et d'air en présence d'un agent tensioactif et d'un agent gélifiant, puis on incorpore dans ladite mousse de la poudre métallique de façon à obtenir une suspension de métal dans la mousse et avant de procéder à la mise en forme de la mousse métallisée, on ajoute à celle-ci un agent stabilisant apte à se polymériser au contact de l'eau de manière à provoquer, avant le traitement thermique, le figement de la structure de la mousse, le mélange mousse métallisée-agent stabilisant comportant en poids 2 à 9% d'agent stabilisant.

2. Procédé selon la revendication 1, caractérisé par le fait que l'agent tensio-actif de type non-ionique est formé par un polyéther comportant une chaine arylalkyl et une fonction alcool.

3. Procédé selon l'une des revendications 1 et 2, caractérisé par le fait que la teneur en agent tensio-actif est comprise entre 3 et 7g/l d'eau.

4. Procédé selon l'une des revendications 1 à 3, caractérisé par le fait que l'agent gélifiant est choisi dans le groupe formé par la carboxyméthyl-cellulose, la polyvinyl-pyrrolidone, l'alcool polyvinylique, l'agar-agar et l'albumine.

5. Procédé selon l'une des revendications 1 à 4, caractérisé par le fait que la teneur en agent gélifiant est comprise entre 5 et 15g/l d'eau.

6. Procédé selon l'une des revendications 1 à 5, caractérisé par le fait que l'on introduit dans la mousse d'eau 30 à 300%, en poids, de poudre métallique par rapport au poids de la mousse.

7. Procédé selon l'une des revendications 1 à 6, caractérisé par le fait que l'agent stabilisant appartient à la famille des polyuréthanes.

8. Procédé selon la revendication 7, caractérisé par le fait que l'agent stabilisant étant un prépolymère de glycol comportant des fonctions isocyanates actives, il est ajouté à la mousse métallisée à une température comprise entre la température ambiante et 0°C.

9. Procédé selon l'une des revendications 1 à 8, caractérisé par le fait que le métal est choisi dans le groupe comportant le fer, le cobalt, le nickel, l'argent, le chrome, le plomb et leurs alliages.

10. Procédé selon la revendication 9, caractérisé par le fait que le métal étant le fer, le cobalt ou le nickel, le traitement thermique comprend un chauffage à une température comprise entre 800 et 1200°C.

11. Procédé selon la revendication 9, caractérisé par le fait que le métal étant le chrome, le traitement thermique comprend un chauffage à une température comprise entre 1000 et 1500°C.

12. Procédé selon la revendication 9, caractérisé par le fait que le métal étant le plomb, le traitement thermique comprend un chauffage à une température comprise entre 200 et 250°C.

13. Procédé selon l'une des revendications 10 à 12, caractérisé par le fait que ledit traitement thermique est effectué sous atmosphère réductrice.

14. Procédé selon la revendication 9, caractérisé par le fait que le métal étant l'argent, le traitement thermique comprend un chauffage à une température comprise entre 800 à 900°C.

15. Procédé selon la revendication 14, caractérisé par le fait que le traitement thermique est effectué à l'air pouvant être enrichi en azote.

16. Utilisation du matériau préparé selon l'une des revendications précédentes pour constituer une électrode d'un générateur électrochimique.

**Patentansprüche**

1. Verfahren zur Herstellung eines porösen Metallkörpers, das die Herstellung eines metallisierten Schaums, seine Formung und seine thermische Behandlung nach Art der Pyrolyse und der Sinterung enthält, dadurch gekennzeichnet, dass man zuerst durch Umrühren und/oder Einblasen von Luft einen Schaum aus Wasser und Luft unter Verwendung eines tensioaktiven Wirkstoffs und eines Geliermittels vornimmt, dann in den Schaum Metallpulver so einbringt, dass man eine Suspension des Metalls in dem Schaum erhält, und dass man vor der Formung des metallisierten Schaums diesem einen stabilisierenden Wirkstoff zugibt, der in der Lage ist, bei Berührung mit Wasser zu polymerisieren, so dass die Schaumstruktur vor der Wärmebehandlung erstarrt, wobei die Mischung aus metallisiertem Schaum und stabilisierendem Wirkstoff zwischen 2 und 9 Gew.-% an stabilisierendem Wirkstoff enthält.

2. Verfahren nach Anspruch 1, dadurch gekennzeichnet, dass der tensio-aktive Wirkstoff von nichtionischem Typ aus einem Polyäther gebildet wird, der eine Arylalkylkette und eine Alkoholfunktion enthält.

3. Verfahren nach einem der Ansprüche 1 und 2, dadurch gekennzeichnet, dass der Gehalt an tensio-aktivem Wirkstoff zwischen 3 und 7g pro Liter Wasser liegt.

4. Verfahren nach einem der Ansprüche 1 bis 3, dadurch gekennzeichnet, dass das Geliermittel aus der Gruppe ausgewählt wird, die von Carboxymethylcellulose, Polyvinyl-Pyrrolidon, Polyvinylalkohol, Agar-Agar und Albumin gebildet wird.

5. Verfahren nach einem der Ansprüche 1 bis 4, dadurch gekennzeichnet, dass der Gehalt an Geliermittel zwischen 5 und 15% pro Liter Wasser liegt.

6. Verfahren nach einem der Ansprüche 1 bis 5, dadurch gekennzeichnet, dass man dem Wasserschaum 30 bis 300 Gew.-% Metallpulver, bezogen auf das Gewicht des Schaums, zufügt.

7. Verfahren nach einem der Ansprüche 1 bis 6, dadurch gekennzeichnet, dass der stabilisierende Wirkstoff zur Familie der Polyurethane gehört.

8. Verfahren nach Anspruch 7, dadurch gekennzeichnet, dass der stabilisierende Wirkstoff ein Vorpolymer des Glykols mit aktiven Isocyanat-Funktionen ist und dass dieser Stoff aus metallisiertem Schaum bei einer Temperatur zwischen Umgebungstemperatur und 0°C zugefügt wird.

9. Verfahren nach einem der Ansprüche 1 bis 8, dadurch gekennzeichnet, dass das Metall aus der Gruppe ausgewählt wird, die Eisen, Kobalt, Nickel, Silber, Chrom, Blei und ihre Legierungen enthält.

10. Verfahren nach Anspruch 9, dadurch gekennzeichnet, dass das Metall Eisen, Kobalt oder Nickel ist und dass die Wärmebehandlung ein Aufheizen auf eine Temperatur zwischen 800 und 1200°C umfasst.

11. Verfahren nach Anspruch 9, dadurch gekennzeichnet, dass das Metall Chrom ist und die Wärmebehandlung ein Aufheizen auf eine Temperatur zwischen 1000 und 1500°C umfasst.

12. Verfahren nach Anspruch 9, dadurch gekennzeichnet, dass das Metall Blei ist und die Wärmebehandlung ein Aufheizen auf eine Temperatur zwischen 200 und 250°C umfasst.

13. Verfahren nach einem der Ansprüche 10 bis 12, dadurch gekennzeichnet, dass die thermische Behandlung in reduzierender Atmosphäre erfolgt.

14. Verfahren nach Anspruch 9, dadurch gekennzeichnet, dass das Metall Silber ist und die Wärmebehandlung ein Aufheizen auf eine Temperatur zwischen 800 und 900°C umfasst.

15. Verfahren nach Anspruch 14, dadurch gekennzeichnet, dass die Wärmebehandlung in Luft erfolgt, die mit Stickstoff angereichert sein kann.

16. Verwendung des nach einem der vorhergehenden Ansprüche hergestellten Materials zur Bildung einer Elektrode eines elektrochemischen Generators.

## Claims

1. A process for manufacturing a porous metall body including the step of realizing a metallized foam, of shaping it and of treating it thermally according to the pyrolysis and sinter methods, characterized in that at first a water and air foam is obtained by stirring and/or injecting air in the presence of a tensio-active agent and of a gellant, that then a metal powder is introduced into said foam in order to obtain a suspension of metall in the foam, and, prior to proceeding to the step of shaping the metallized foam, a stabilizing agent which polymerizes when in contact with water is added to the foam in order to provoke, the coagulation of the foam structure prior to the thermal treatment, the mixture made of metallized foam and stabilizing agent comprising between 2 and 9% by weight of stabilizing agent.

2. A method according to claim 1, characterized in that the tensio-active agent of the non-ionic type is made of a polyether comprising an arylalkyl chain and an alcohol function.

3. A method according to one of claims 1 and 2, characterized in that the content of tensio-active agent is chosen between 3 and 7 g per liter of water.

4. A method according to one of claims 1 to 3, characterized in that the gellant is chosen from among the group constituted by carboxymethyl cellulose, polyvinyl-pyrrolidone, polyvinylalcohol, agar-agar and albumine.

5. A method according to one of claims 1 to 4, characterized in that the gellant content is chosen between 5 and 15 g per liter of water.

6. A method according to one of claims 1 to 5, characterized in that between 30 and 300% by weight of metall powder with respect to the weight of the foam is added to the water foam.

7. A method according to one of claims 1 to 6, characterized in that the stabilizing agent belongs to the polyurethane family.

8. A method according to claim 7, characterized in that the stabilizing agent being a glycolprepolymere including active isocyanate functions, this agent is added to the metallized foam at a temperature chosen between ambient temperature and 0°C.

9. A method according to one of claims 1 to 8, characterized in that the metall is chosen from the group comprising iron, cobalt, nickel, silver, chromium, lead and their alloys.

10. A method according to claim 9, characterized in that the metall being iron, cobalt or nickel, the thermal treatment comprises a step of heating up to a temperature included between 800 and 1200°C.

11. A method according to claim 9, characterized in that the metall being chromium, the thermal treatment comprises a step of heating up to a temperature including between 1000 and 1500°C.

12. A method according to claim 9, characterized in that the metall being lead, the thermal treatment comprises a step of heating up to a temperature included between 200 and 250°C.

13. A method according to one of claims 10 to 12, characterized in that said thermal treatment is performed under a reducing atmosphere.

14. A method according to claim 9, characterized in that the metall being silver, the thermal treatment comprises a step of heating up to a temperature included between 800 and 900°C.

15. A method according to claim 14, characterized in that the thermal treatment is performed under air which can be enriched with azote.

16. The use of the material prepared according to one of the preceding claims for constituting an electrode of an electrochemical generator.

# FIG.1

FIG. 2

FIG. 3